# EUROPÄISCHE PATENTSCHRIFT

(11) **EP 3 361 618 B1**
(45) Veröffentlichungstag und Bekanntmachung des Hinweises auf die Patenterteilung: **19.08.2020**
(21) Anmeldenummer: 18156597.9
(22) Anmeldetag: 14.02.2018
(51) Int. Cl.: H02M 5/458, H02M 7/5387, H02P 3/22

(54) **FÜNFSCHALTERTOPOLOGIE**
FIVE SWITCH TOPOLOGY
TOPOLOGIE À CINQ COMMUTATEURS

(30) Priorität: 14.02.2017 DE 102017102955
(43) Veröffentlichungstag der Anmeldung: 15.08.2018
(73) Patentinhaber: ebm-papst Mulfingen GmbH & Co. KG, 74673 Mulfingen (DE)
(72) Erfinder: Schroth, Sebastian, 74635 Kupferzell (DE); Weckert, Marco, 74677 Dörzbach-Hohebach (DE); Wiedmann, Georg, 74532 Ilshofen (DE)
(74) Vertreter: Staeger & Sperling Partnerschaftsgesellschaft mbB

(56) Entgegenhaltungen:
- EP-A1- 2 136 465
- WO-A1-2016/135840
- CN-A- 101 707 442
- CN-A- 104 079 227
- DE-A1-102009 047 616
- US-A1- 2007 274 109

## Beschreibung

Die Erfindung betrifft eine Schaltungstopologie für einen Frequenzumrichter zum Betreiben einer elektrischen Maschine an einem elektrischen Wechselspannnungsnetz. Die Erfindung betrifft auch ein Verfahren zum Betreiben eines Motors an dem Frequenzumrichter.

Bekannte Frequenzumrichter weisen eine Einspeiseeinheit auf, die über einen Gleichspannungs-Zwischenkreis mit einem Wechselrichter gekoppelt ist. In dem Gleichspannungs-Zwischenkreis ist in der Regel ein Zwischenkreiskondensator bereitgestellt.

Aus der DE 197 39 553 A1 ist ein Frequenzumrichter bekannt. Die prinzipielle Funktionsweise eines Frequenzumrichters ist bekannt. Danach kann mittels eines Frequenzumrichters elektrische Energie zwischen einem versorgungsseitigen Wechselspannungsnetz und einer elektrischen Maschine ausgetauscht werden. Die elektrische Maschine kann prinzipiell ein Elektromotor oder ein Generator sein. Entsprechend erfolgt der Austausch der elektrischen Energie entweder vom Wechselspannungsnetz zur elektrischen Maschine oder in umgekehrter Richtung.

Weitere Frequenzumrichter sind beispielsweise in den Druckschriften US 2007/274109 A1, CN 104 079 227 A, EP 2 136 465 A1, DE 10 2009 047616 A1, WO 2016/135840 A1, CN 101 707 442 A offenbart.

Die vorliegende Erfindung beschäftigt sich vornehmlich mit einem Frequenzumrichter in einer Topologie zum Ansteuern eines Elektromotors und insbesondere eines EC-Motors. Handelt es sich bei der elektrischen Maschine demnach um einen Elektromotor oder eine universell betreibbare Maschine im Motorbetrieb, so wirkt die Einspeiseeinheit als Gleichrichter, mittels welchem elektrische Energie aus dem Wechselspannungsnetz in den Zwischenkreis eingespeist wird.

Es ist dabei mittels des Frequenzumrichters möglich, eine Umwandlung zwischen einer Netz-Wechselspannung mit vorgegebener Netzfrequenz und einer für den Betrieb der elektrischen Maschine benötigten Wechselspannung mit bestimmter Frequenz durchzuführen. Hierzu erfolgt eine 2-stufige Spannungswandlung. In der ersten Stufe bewirkt die netzseitige Einspeiseeinheit des Frequenzumrichters eine Umwandlung zwischen der Netz-Wechselspannung und einer Gleichspannung des Gleichspannungs-Zwischenkreises. Dieser wiederum verbindet die Einspeiseeinheit mit einem Wechselrichter.

Der Wechselrichter hat die Aufgabe die Zwischenkreis-Gleichspannung in eine geeignete Wechselspannung für den Motor umzuwandeln.

In dem Gleichspannungs-Zwischenkreis sorgt ein sogenannter Zwischenkreiskondensator mit einer ausreichend großen Kapazität dafür, dass eine erzeugte Welligkeit der Zwischenkreis-Gleichspannung für die nachfolgende Spannungswandlung mit dem Wechselrichter geglättet wird. Bevorzugt ist die Zwischenkreiskondensator-Kapazität auch groß genug, um bei einem kurzzeitigen Ausfall der versorgungsseitigen Netzwechselspannung einen unterbrechungsfreien Betrieb der elektrischen Maschine zu ermöglichen.

Nach dem Verbinden der Einspeiseeinheit mit den Phasen des Wechselspannungsnetzes erzeugt die Gleichrichtung die Gleichspannung in dem Zwischenkreis, wodurch der Zwischenkreiskondensator aufgeladen wird. Nachdem der Zwischenkreiskondensator so weit aufgeladen ist, dass die Zwischenkreis-Gleichspannung den erforderlichen Spannungswert erreicht hat, kann der Motor daran betrieben werden. Der Wechselrichter erzeugt eine Wechselspannung, so dass in den Strängen des Motors ein Drehstrom fließt. Als Wechselrichter ist hierzu z. B. eine H-Brücke oder Vollbrücke bekannt, die insofern nicht näher erläutert wird.

Bei der Anwendung eines EC-Motors an Wechselspannungsnetzten werden heutzutage typischerweise Zwischenkreiskondensatoren verwendet, überwelche ein getakteter mehrphasiger Wechselrichter dem EC-Motor die für den gewünschten Betriebspunkt passenden Ströme/Spannungen bzw. Energie zur Verfügung stellt.

Sinkt die Zwischenkreisspannung bei den bekannten Frequenzumrichtern unter die vom Elektromotor erzeugte induzierte Spannung ab, so kommt es durch die Dioden des Wechselrichters automatisch zu einer Rückspeisung von Energie vom Motor zur Elektronik und es wird ein negatives Drehmoment erzeugt, wodurch sich die Drehzahl des Motors verringert bzw. der Motor abgebremst wird.

Ein entsprechend großer Elektrolytkondensator hilft dabei die Spannungseinbrüche gering zu halten, verursacht aber gleichzeitig je nach Auslegung eine Reduktion des Leistungsfaktors des Frequenzumrichters durch eine verzerrte Stromaufnahme des Gleichrichters vom Netz.

Wird der Elektrolytkondensator in seiner Kapazität jedoch stark reduziert (schlanker Zwischenkreis), so erfolgt ein zu schnelles Absinken der Zwischenkreisspannung im Netznulldurchgang bzw. bei kurzen Netzunterbrechungen was ebenfalls zur Rückspeisung und auch zur Geräuschbildung im Motor führt.

Neben der Problematik des Rückspeisens von elektrischer Spannung des Motors in den Zwischenkreis ist der Zeitpunkt der Leistungsaufnahme innerhalb einer Netzperiode bei den bekannten Schaltungstopologien nicht frei wählbar. Ferner treten durch das Takten mit hoher Taktfrequenz im Wechselrichter nachteilige und demnach unerwünschte Halbleiterverluste auf.

Es ist daher Aufgabe der vorliegenden Erfindung, vorbesagte Nachteile zu überwinden und einen Frequenzumrichter bereit zu stellen, bei dem das Rückspeisen ins Netz unterbunden werden kann, dessen Leistungsaufnahme verbessert gesteuert werden kann und beim dem Halbleiterverluste im Wechselrichter reduziert werden können.

Diese Aufgabe wird durch die Merkmalskombination gemäß Anspruch 1 gelöst.

Ein Grundgedanke der vorliegenden Erfindung besteht in einer 5-Schalter Topologie, bei dem vier Schalter als Vierquadrantensteller angeordnet sind und ein zusätzlicher Schalter in den Leitungspfad in dem wechselrichterseitigen Teil des Gleichspannungs-Zwischenkreises angeordnet bzw. verschaltet ist.

Dabei wird der zusätzliche Schalter mit einer bestimmten hochfrequenten PWM-Frequenz getaktet. Die Schalter im Vierquadrantensteller werden nur niederfrequent getaktet, um die Motorströme zu kommutieren. Ist zusätzliche Schalter geschlossen wird ein Stromfluss über den Zwischenkreis ermöglicht und der Motor wird mit Energie gespeist. Wird der zusätzliche Schalter jedoch geöffnet, so wird der Motor in den Freilauf gesetzt.

Erfindungsgemäß wird demnach ein Frequenzumrichter zum Betreiben einer elektrischen Maschine an einem elektrischen Wechselspannungsnetz vorgeschlagen, wobei der Frequenzumrichter eine gleichrichtende Einspeiseeinheit und einen Wechselrichter aufweist, die miteinander über einen Gleichspannungs-Zwischenkreis verschaltet sind. Im Gleichspannungs-Zwischenkreis ist ein Zwischenkreiskondensator vorgesehen. Der Wechselrichter ist als Vierquadrantensteller mit vier Schaltern realisiert, wobei in einem Leitungspfad in dem wechselrichterseitigen Teil des Gleichspannungs-Zwischenkreises, welcher den Gleichspannungs-Zwischenkreis mit dem Wechselrichter verbindet, ein taktbarer Schalter angeordnet ist, welcher zum wahlweisen Öffnen oder Schließen des Leitungspfades oder für den getakteten Betrieb ausgelegt ist.

Der zusätzliche Schalter bzw. die entsprechende Schalteinrichtung zwischen dem Gleichspannungs-Zwischenkreises und dem Wechselrichter kann als Halbleiterschalter mit parallel geschalteter Freilauf-Diode, wie z. B. als MOSFET oder aus zwei in Reihe bzw. Serie geschalteten Halbleiterschaltern mit je einer parallel geschalteten Freilauf-Diode realisiert werden, wobei die Durchlassrichtung der Freilauf-Dioden dann entgegengesetzt ist.

Weiter kann mit Vorteil vorgesehen sein, dass in der Schalteinrichtung bzw. dem entsprechenden Leitungspfad zur Realisierung des zusätzlichen Schalters eine Diode in einer Durchlassrichtung vorgesehen ist, die dazu ausgelegt ist, einen Stromfluss von dem wechselrichterseitigen Teil des Gleichspannungs-Zwischenkreises zu der Einspeiseeinheit zu verhindern.

Ein weiterer Aspekt der vorliegenden Erfindung betrifft ein Verfahren zum Betreiben eines wie zuvor beschriebenen Frequenzumrichters bei dem der besagte zusätzliche Schalter mittels einer PWM-Taktung getaktet wird.

Bevorzugt ist es, wenn beim Betrieb der elektrischen Maschine die Schalter des Vierquadrantenstellers in einem niederfrequenten Takt getaktet werden, während der zusätzliche Schalter im Leitungspfad in dem wechselrichterseitigen Teil des Gleichspannungs-Zwischenkreises in einem hochfrequenten Takt getaktet wird, der vorzugsweise um ein Mehrfaches höher ist als der niederfrequente Takt.

Mit Vorteil erfolgt der Betrieb so, dass beim Öffnen des Schalters der Motor in den Freilauf gesetzt wird, während beim Schließen des Schalters der Stromfluss über den Gleichspannungs-Zwischenkreis zum Motor ermöglicht wird, wobei zwei der Schalter des Vierqaudrantenstellers für den Wechsel zwischen Freilauf und Motorspeisung nicht umgeschaltet werden müssen, während mittels der Schalterstellung der beiden anderen Schalter ein Strom über die beiden erstgenannten Schalter des Vierqaudrantenstellers gesteuert wird, wodurch die Verluste innerhalb des Wechselrichters auf die jeweiligen Schalter verteilt werden.

Mit Vorteil ist das Verfahren so ausgelegt, dass die Kommutierung der Schalter des Vierqaudrantenstellers nur erfolgt, um die am Motor angelegte Spannung im Vorzeichen zu kommutieren.

In einer weiteren vorteilhaften Ausgestaltung der Erfindung ist vorgesehen, dass der Schalter im Leitungspfad in dem wechselrichterseitigen Teil des Gleichspannungs-Zwischenkreises zum Wechselrichter geöffnet wird, sobald die Zwischenkreis-Gleichspannung unterhalb der von der elektrischen Maschine erzeugten Klemmenspannung absinkt, womit ein Rückspeisen von induzierter Energie von der elektrischen Maschine in den Gleichspannungs-Zwischenkreis gezielt verhindert wird.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine Schaltungstopologie eines erfindungsgemäßen Frequenzumrichters;
- Fig. 2: die Schaltungsanordnung nach Figur 1 mit geschlossenem Schalter im Leitungspfad in dem wechselrichterseitigen Teil des GleichspannungsZwischenkreises;
- Fig. 3: die Schaltungsanordnung nach Figur 1 mit geöffnetem Schalter im Leitungspfad in dem wechselrichterseitigen Teil des GleichspannungsZwischenkreises;
- Fig. 4: drei beispielhafte Schaltungsanordnungen zur Realisierung des Schalters im Leitungspfad in dem wechselrichterseitigen Teil des Gleichspannungs-Zwischenkreises;
- Fig. 5: Stromverlaufskurven durch die Schalter der Schaltungstopologie aus Figur 1 und
- Fig. 6: Motorkennwerte des an die Schaltungstopologie der Figur 1 angeschlossenen Motors.

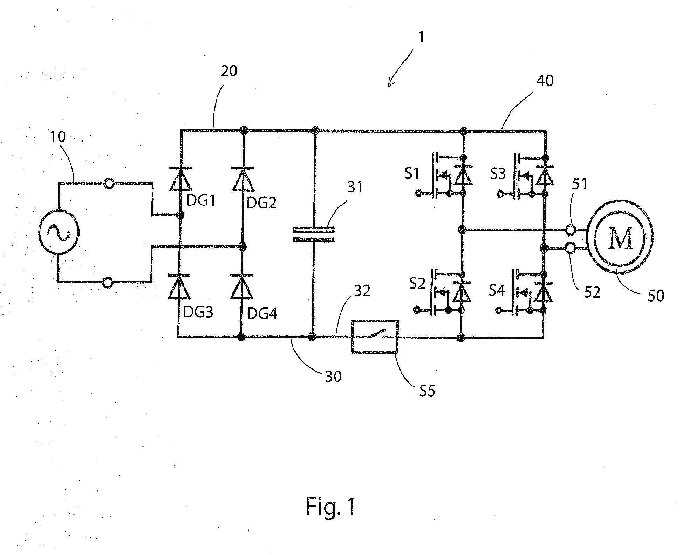

Im Folgenden wird die Erfindung mit Bezug auf die Figuren 1 bis 6 näher erläutert, wobei gleiche Bezugszeichen auf gleiche funktionale und oder strukturelle Merkmale hinweisen.

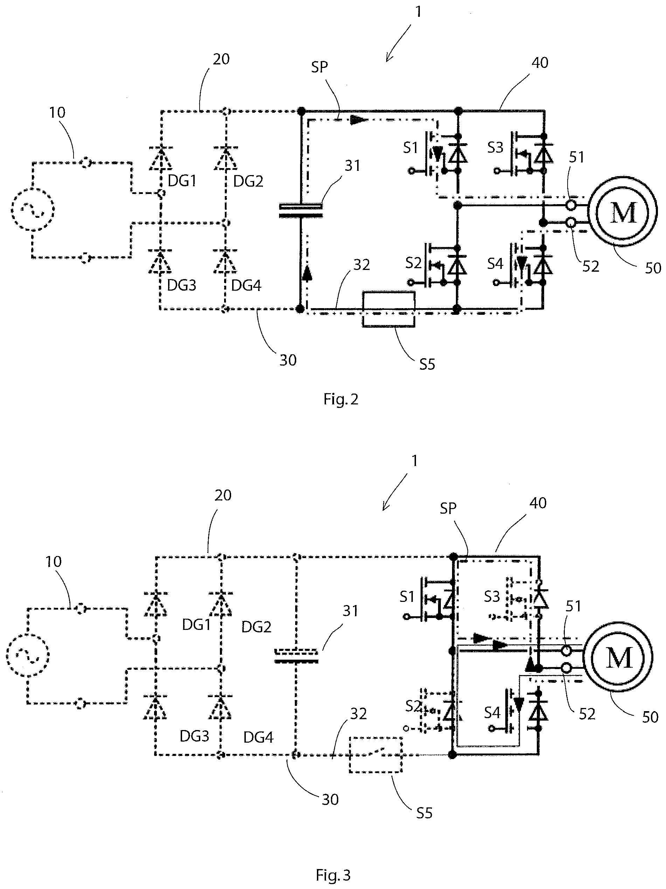

In den Figuren 1 bis 3 ist ein Ausführungsbeispiel einer Schaltungstopologie eines erfindungsgemäßen Frequenzumrichters 1 gezeigt, wobei in der Figur 2 der Schalter S5 geschlossenen und in der Figur 3 der offene Zustand mit den entsprechenden Stromlaufpfaden SP (gestrichelte Pfleillinie) gezeigt ist.

Der Frequenzumrichter 1 ist ausgebildet zum Betreiben einer elektrischen Maschine 50, die im vorliegenden Ausführungsbeispiel ein Elektromotor 50 ist. Der Frequenzumrichter 1 ist an einem elektrischen Wechselspannungsnetz 10 angeschlossen, wobei der Frequenzumrichter 1 eine gleichrichtende Einspeiseeinheit 20, nämlich einen Gleichrichter aus vier Dioden DG1, DG2 DG3, DG4 und einen Wechselrichter 40 aufweist, die miteinander über einen Gleichspannungs-Zwischenkreis 30 verbunden sind.

Der Gleichspannungs-Zwischenkreis 30 verfügt über einen Zwischenkreiskondensator 31. Der Wechselrichter 40 ist als Vierquadrantensteller mit vier Leistungsschalter S1, S2, S3, S4 (wie z. B. MOSFET's) realisiert, wobei zu erkennen ist, dass in dem Leitungspfad 32 in dem wechselrichterseitigen Teil des Gleichspannungs-Zwischenkreises 30, welcher den Gleichspannungs-Zwischenkreis 30 mit dem Wechselrichter 40 verbindet, ein taktbarer Schalter S5 angeordnet ist, welcher zum wahlweisen Öffnen oder Schließen des Leitungspfades 32 oder für den getakteten Betrieb ausgelegt ist.

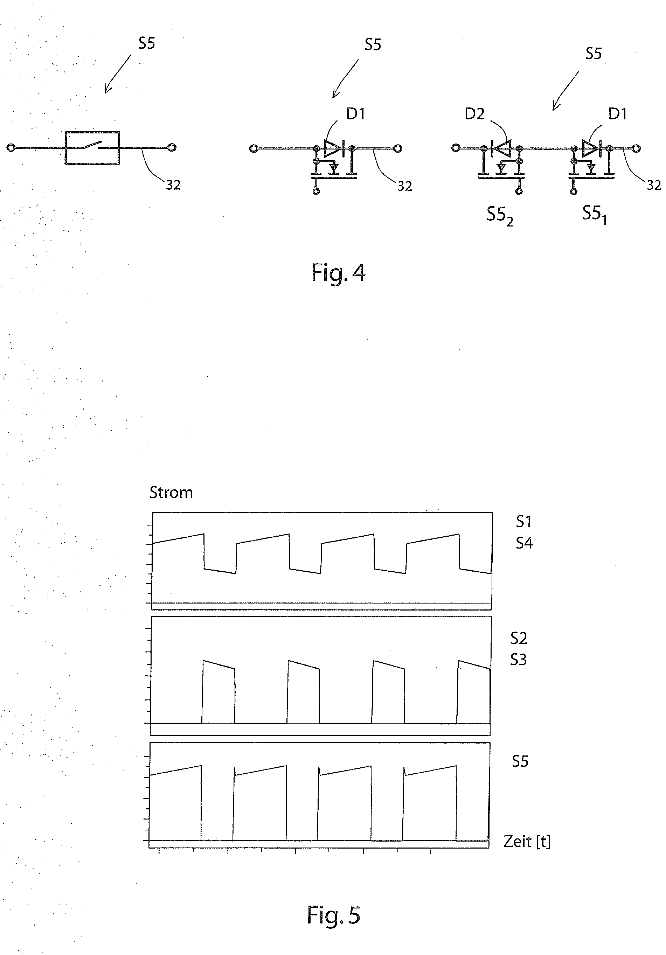

Der Schalter S5 bzw. die entsprechende Schalteinrichtung zwischen dem Gleichspannungs-Zwischenkreises 30 und dem Wechselrichter 40, kann wie in der Figur 4 dargestellt, entweder als Halbleiterschalter mit parallel geschalteter Freilauf-Diode (mittlere Ansicht der Figur 4) oder aus zwei in Reihe bzw. Serie geschalteten Halbleiterschaltern S5₁, S5₂ mit je einer parallel geschalteter Freilauf-Diode D1, D2 realisiert werden, wobei die Durchlassrichtung der Freilauf-Dioden D1, D2 (rechte Ansicht der Figur 4) entgegengesetzt ist.

Die folgenden Betrachtungen beziehen sich beispielhaft auf einen positiven Stromfluss durch den Motor von Klemme 51 nach Klemme 52, wobei der Motor als Antrieb betrieben wird.

In der Figur 2 ist der Schalter S5 geschlossen, der Motor 50 arbeitet als Antrieb und eine positive induzierte Spannung liegt an den Klemmen 51, 52 des Motors 50 an. Somit erfolgt ein Stromfluss über den Zwischenkreis 30 über die beiden Schalter S1 und S4 und der Motor 50 wird mit Energie gespeist.

In der Figur 2 ist der Schalter S5 geöffnet. Auf Grund der vor dem Öffnen des Schalters positiven Stromfluss durch die Motorwicklung des Motors 50 und der dadurch im Motor 50 gespeicherten Energie wird der Stromfluss durch die Motorwicklung zunächst aufrecht erhalten. Der Strom schließt sich gemäß den in Figur 3 eingezeichneten Strompfaden. Somit liegt zwischen den Klemmen 51 und 52 des Motors 50 keine Spannung an.

Die Schalter S1 und S4 müssen für den Wechsel zwischen der Speisung (wie in Figur 2) und dem Freilauf (wie in Figur 3) nicht umgeschaltet werden. Es ergibt sich je nach Schalterzustand der Schalter S1 und S4 ein Strom über S2 und S3. Dadurch ist es möglich, die Verluste innerhalb des Wechselrichters 40 zwischen den Halbleiterschaltern S1, S3 bzw. S2, S4 zu verteilen bzw. zu minimieren. Eine Kommutierung der Schalter S1, S2, S3, S4 muss nur erfolgen, wenn die am Motor 50 angelegte Spannung im Vorzeichen kommutiert werden muss. Es ist zu erkennen, dass bei positivem Motorstrom und geschlossenem Schalter S5 kein Strom über die Halbleiter S2 und S3 fließt. Wird der Schalter S5 aber geöffnet und bleiben S1 und S4 weiterhin geschlossen, so schließt sich der Strom sowohl über den Freilaufpfad des Halbleiters S2 als auch über den von S3. Dadurch verringert sich der Stromfluss in den Schaltern S1 und S4 und teilt sich auf die Schaltungspaare S1 und S3 sowie S2 und S4 auf, was in der Figur 5 näher dargestellt ist."

Die Figur 5 zeigt die Stromverlaufskurven durch die Schalter S1, S2, S3, S4 und S5 der beschriebenen Schaltungstopologie bei getaktetem Schalter S5.

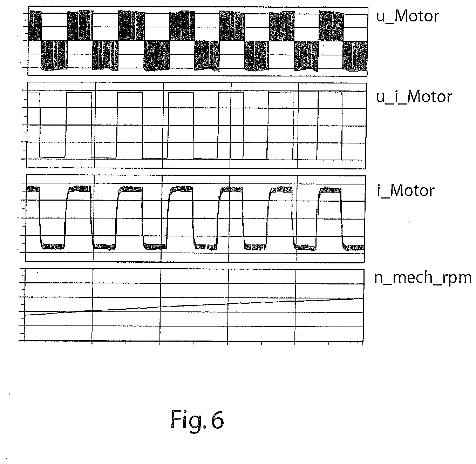

In der Figur 6 sind die elektrischen und mechanischen zeitlichen Verläufe der Motorgrößen des Motors 50 dargestellt, nämlich die angelegte Spannung u_ Motor, sowie der Motorstrom i_ Motor und die durch die EMK erzeugte induzierte Motorspannung u_i_ Motor sowie die Drehzahl n_mech_ rpm im geregelten Betrieb beispeilhaft während der Beschleunigungsphase des Motors 50 untereinander dargestellt.

Durch die Halbleiterschalter S1, S2, S3, S4 wird die Polarität der am Motor 50 angelegten Spannung verändert, was in der Figur 6 der Hüllkurve von u_Motor entspricht. Durch das Takten des Schalters S5 entsteht dann eine Rechteckspannung. Der Motorstrom i_ Motor und die EMK u_ i_ Motor liegen in Phase zueinander, hierdurch wird Energie in den Motor 50 übertragen, wodurch die in der Figur 6 dargestellte Drehzahl n_ mech_ rpm in der Beschleunigungsphase ansteigt.

## Patentansprüche

1. Frequenzumrichter (1) zum Betreiben einer elektrischen Maschine (50) an einem elektrischen Wechselspannungsnetz (10), wobei der Frequenzumrichter (1) eine gleichrichtende Einspeiseeinheit (20) und einen Wechselrichter (40) aufweist, die miteinander über einen Gleichspannungs-Zwischenkreis (30) mit einem Zwischenkreiskondensator (31) verschaltet sind, wobei der Wechselrichter (40) als Vierquadrantensteller mit vier Schalter (S1, S2, S3, S4) in einer H-Brücke sowie einem taktbaren Schalter (S5) realisiert ist, derin einem Leitungspfad (32) in dem wechselrichterseitigen Teil des Gleichspannungs-Zwischenkreises (30) angeordnet ist, welcher den Gleichspannungs-Zwischenkreis (30) mit dem Wechselrichter (40) verbindet, und der taktbare Schalter (S5) ausgebildet ist, zum wahlweisen Öffnen oder Schließen des Leitungspfades (32) oder für den getakteten Betrieb, **dadurch gekennzeichnet dass** der Schalter (S5) als ein getakteter Schalter umfassend zwei in Reihe geschalteten Halbleiterschaltern (S5₁, S5₂) mit je einer parallel geschalteten Freilauf-Diode (D1, D2) realisiert ist, wobei die Durchlassrichtung der Freilauf-Dioden (D1, D2) entgegengesetzt ist und wobei die Schalter (S1, S2, S3, S4) in einem niederfrequenten Takt getaktet werden, während der Schalter (S5) in einem hochfrequenten Takt getaktet wird, der vorzugsweise um ein Mehrfaches höher ist als der niederfrequente Takt und wobei eine Diode (D1, D2) des Schalters (S5) dazu ausgelegt ist, einen Stromfluß von dem wechselrichterseitigen Teil des Gleichspannungs-Zwischenkreises (30) zu der Einspeiseeinheit (20) zu verhindern.

2. Frequenzumrichter (1) nach Anspruch 1, wobei der Wechselrichter (40) als dreiphasiger Wechselrichter realisiert ist.

3. Verfahren zum Betreiben eines Frequenzumrichters (1) gemäß einem der vorhergehenden Ansprüche 1 oder 2, wobei die Schalter (S1, S2, S3, S4) in einem niederfrequenten Takt getaktet werden, während der Schalter (S5) in einem hochfrequenten PWM-Takt getaktet wird, der beim Öffnen des Schalters (S5) der Motor in den Freilauf gesetzt wird, während beim Schließen des Schalters (S5) der Stromfluss über den Gleichspannungs-Zwischenkreis (30) zum Motor ermöglicht wird und eine Kommutierung des Wechselrichters (40) nur erfolgt, um die am Motor angelegte Spannung im Vorzeichen zu kommutieren.

4. Verfahren zum Betreiben eines Frequenzumrichters (1) gemäß dem vorhergehenden Anspruch 3, wobei der Schalter (S5) mittels einer PWM getaktet wird.

5. Verfahren nach einem der Ansprüche 3 oder 4, wobei die Schalter (S1, S3) des Vierqaudrantenstellers für den Wechsel zwischen Freilauf und Motorspeisung nicht umgeschaltet werden.

6. Verfahren nach Anspruch 5, wobei im Freilauffall bei geöffnetem Schalter (S5) durch Umschalten mindestens eines der Halbleiter des Wechselrichters (40) der Freilaufpfad variiert werden kann, um die Verluste in den Halbleitern des Wechselrichters (40) zu verteilen.

7. Verfahren nach einem der Ansprüche 3 bis 6, wobei der Schalter (S5) geöffnet wird, sobald die Zwischenkreis-Gleichspannung unterhalb der von der elektrischen Maschine (50) erzeugten Klemmenspannung absinkt, womit ein Rückspeisen von induzierter Energie von der elektrischen Maschine (50) in den Gleichspannungs-Zwischenkreis (30) verhindert wird.

## Claims

1. Frequency converter (1) for operating an electrical machine (50) on an electrical AC voltage network (10), wherein the frequency converter (1) has a rectifier feed unit (20) and an inverter (40), which are connected to one another via a DC voltage intermediate circuit (30) with an intermediate circuit capacitor (31), wherein the inverter (40) is implemented as a four-quadrant actuator with four switches (S1, S2, S3, S4) in a H-bridge and a clockable switch (S5) which is arranged in a conduction path (32) in the inverter-side part of the DC voltage intermediate circuit (30) which connects the DC voltage intermediate circuit (30) to the inverter (40), and the clockable switch (S5) is formed, for selectively opening or closing the conduction path (32) or for clocked operation, **characterized in that** the switch (S5) is formed as a clocked switch comprising two series-connected semiconductor switches (S51, S52) each having a parallel-connected freewheeling diode (D1, D2), wherein the forward direction of the freewheeling diodes (D1, D2) is opposite and wherein the switches (S1, S2, S3, S4) are clocked in a low-frequency clock, while the switch (S5) is clocked in a high-frequency clock which is preferably several times higher than the low-frequency clock, and wherein a diode (D1, D2) of the switch (S5) is configured to prevent a current flow from the inverter-side part of the DC voltage intermediate circuit (30) to the feed unit (20).

2. Frequency converter (1) according to claim 1, wherein the inverter (40) is formed as a three-phase inverter.

3. Method for operating a frequency converter (1) according to one of the preceding claims 1 or 2, wherein the switches (S1, S2, S3, S4) are clocked in a low-frequency clock, while the switch (S5) is clocked in a high-frequency PWM clock, which, when opening the switch (S5), sets the motor in freewheeling operation, whereas, when closing the switch (S5), the current flow via the DC voltage intermediate circuit (30) to the motor is enabled and a commutation of the inverter (40) only takes place in order to commutate the voltage applied to the motor in sign.

4. Method for operating a frequency converter (1) according to the preceding claim 3, wherein the switch (S5) is clocked by means of a PWM.

5. Method according to one of claims 3 or 4, wherein the switches (S1, S3) of the four-quadrant controller are not switched over for the changeover between freewheeling operation and motor supply.

6. Method according to claim 5, wherein in the freewheeling operation with the switch (S5) open, the freewheeling operation path can be varied through switching over at least one of the semiconductors of the inverter (40) in order to distribute the losses in the semiconductors of the inverter (40).

7. Method according to one of the claims 3 to 6, wherein the switch (S5) is opened as soon as the intermediate circuit DC voltage decreases below the terminal voltage generated by the electric machine (50), thereby preventing a feedback of induced energy from the electric machine (50) into the DC voltage intermediate circuit (30).

## Revendications

1. Convertisseur de fréquence (1) pour le fonctionnement d'une machine électrique (50) sur un réseau de tension alternative électrique (10), dans lequel le convertisseur de fréquence (1) présente une unité d'alimentation redresseur (20) et un onduleur (40), qui sont interconnectés l'un avec l'autre par le biais d'un circuit intermédiaire de tension continue (30) avec un condensateur de circuit intermédiaire (31), dans lequel l'onduleur (40) est réalisé en tant que pont en H avec quatre commutateurs (S1, S2, S3, S4) dans un pont en H ainsi qu'un commutateur cyclique (S5), qui est agencé dans un chemin de conduction (32) dans la partie côté onduleur du circuit intermédiaire de tension continue (30), lequel relie le circuit intermédiaire de tension continue (30) à l'onduleur (40), et le commutateur cyclique (S5) est réalisé pour l'ouverture ou [a fermeture sélective du chemin de conduction (32) ou pour le fonctionnement cadencé, **caractérisé en ce que** le commutateur (S5) est réalisé en tant que commutateur cadencé comprenant deux commutateurs semi-conducteurs (S5₁, S5₂) montés en série avec respectivement une diode de roue libre (D1, D2) montée en parallèle, dans lequel le sens de passage des diodes de roue libre (D1, D2) est inverse et dans lequel les commutateurs (S1, S2, S3, S4) sont cadencés dans un cycle basse fréquence, pendant que le commutateur (S5) est cadencé dans un cycle haute fréquence, qui est supérieur de préférence d'un multiple au cycle basse fréquence et dans lequel une diode (D1, D2) du commutateur (S5) est conçue pour empêcher un flux de courant de la partie côté onduleur du circuit intermédiaire de tension continue (30) à l'unité d'alimentation (20).

2. Convertisseur de fréquence (1) selon la revendication 1, dans lequel l'onduleur (40) est réalisé en tant qu'onduleur triphasé,

3. Procédé de fonctionnement d'un convertisseur de fréquence (1) selon l'une quelconque des revendications 1 ou 2 précédentes, dans lequel les commutateurs (51, S2, 83, S4) sont cadencés dans une cadence basse fréquence, pendant que le commutateur (S5) est cadencé dans une cadence PWM haute fréquence, qui est mis en roue libre lors de l'ouverture du commutateur (S5) du moteur, alors que lors de la fermeture du commutateur (S5) le flux de courant est permis par le biais du circuit intermédiaire de tension continue (30) vers le moteur et une commutation de l'onduleur (40) n'a lieu que pour commuter la tension appliquée au moteur dans le signe.

4. Procédé de fonctionnement d'un convertisseur de fréquence (1) selon la revendication 3 précédente, dans lequel le commutateur (S5) est cadencé au moyen d'un PWM.

5. Procédé selon l'une quelconque des revendications 3 ou 4, dans lequel les commutateurs (S1, S3) du pont en H ne sont pas commutés pour le changement entre roue libre et alimentation moteur.

6. Procédé selon la revendication 5, dans lequel dans le cas de roue libre lorsque le commutateur (S5) est ouvert par commutation d'au moins un des semi-conducteurs de l'onduleur (40) le chemin de roue libre peut être modifié pour distribuer les pertes dans les semi-conducteurs de l'onduleur (40).

7. Procédé selon l'une quelconque des revendications 3 à 6, dans lequel le commutateur (S5) est ouvert, dès que la tension continue de circuit intermédiaire descend en-dessous de la tension aux bornes générée par la machine électrique (50), ce par quoi une réinjection d'énergie induite de la machine électrique (50) dans le circuit intermédiaire de tension continue (30) est empêchée.
